# EUROPEAN PATENT APPLICATION

(11) **EP 4 714 245 A1**
(43) Date of publication of application: **25.03.2026**
(21) Application number: 25191842.1
(22) Date of filing: 25.07.2025
(51) Int. Cl.: A01C 7/06, A01C 23/00, A01M 7/00

(54) **AGRICULTURAL SYSTEM AND METHOD COMPRISING SUCH**

(30) Priority: 23.09.2024 US 202418893551
(71) Applicant: Deere & Company, Moline, IL 61265 (US)
(72) Inventor: GOLDBERG, BENJAMIN I., 68163 Mannheim (DE); MARX, SAMUEL E., 68163 Mannheim (DE); HERRMANN, KENNETH E., 68163 Mannheim (DE); RUBY, JORDAN J., 68163 Mannheim (DE); ZHANG, HAIFENG, 68163 Mannheim (DE)
(74) Representative: Reichert, Christian

(57) **Abstract**

An agricultural system (90) is disclosed. The agricultural system (90) comprising:
an application machine (100) having a plurality of applicators (109) that apply liquid to a field, each applicator (109) having a controllable valve (300), that opens to pass liquid through the valve (300), and a spray tip (302) that receives the liquid that passes through the valve (300) and that applies the liquid to the field; a plurality of applicator pressure sensors (306), each applicator pressure sensor (306) being mounted to a corresponding applicator (109) and being configured to sense liquid pressure between the controllable valve (300) and the spray tip (302) of the corresponding applicator (109); a central flow system (308) configured to pump the liquid from a reservoir (107) to the plurality of applicators (109); an application detection and control system (320) configured to generate an applicator parameter for each applicator (109) based on the liquid pressure sensed by the corresponding applicator pressure sensor (306); a machine learning-based (ML-based) classification system (362) configured to generate a classification output indicative of a state of the applicator (109) based on the applicator parameter; and
a control signal generator (352) configured to generate a control signal based on the classification output. Further, a computer implemented method comprising such agricultural system (90) is disclosed.

## Description

### FIELD OF THE DESCRIPTION

The present description relates to agricultural machines. More specifically, the present description relates to detecting and controlling application of material to a field, using an agricultural machine.

### BACKGROUND

There is a wide variety of different types of agricultural machines that apply material to an agricultural field. Some such agricultural machines include sprayers, tillage machines with side dressing bars, air seeders, and planters that have row units, among others.

As one example, a row unit is often mounted to a planter with a plurality of other row units. The planter is often towed by a tractor over soil where seed is planted in the soil, using the row units. The row units on the planter follow the ground profile by using a combination of a down force assembly that imparts a down force to the row unit to push disk openers into the ground and gauge wheels to set depth of penetration of the disk openers.

Row units can also be used to apply material to the field (e.g., fertilizer to the soil, to a seed, etc.) over which the row units are traveling. In some scenarios, each row unit has a valve that is coupled between a source of material to be applied, and an application assembly. As the valve is actuated, the material passes through the valve, from the source to the application assembly, and is applied to the field.

The discussion above is merely provided for general background information and is not intended to be used as an aid in determining the scope of the claimed subject matter.

### SUMMARY

An application device on an agricultural machine includes a valve and an actuator that is controlled to apply liquid material, through a spray tip, to a field. Pressure is sensed between the valve and the spray tip. A machine learning-based detector detects a state of the applicator, such as whether the spray tip is partially or fully blocked or is missing. A control signal is generated based on the detected state of the applicator.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a top view of one example of a planting machine, shown in a partial pictorial and partial schematic form.
FIG. 2 shows a block diagram of one example of a portion of an agricultural system.
FIG. 3 is a side view showing one example of a row unit of the planting machine illustrated in FIG. 1.
FIG. 4 is a side view showing another example of a row unit of the planting machine illustrated in FIG. 1.
FIG. 5 is a side view showing another example of a row unit of the planting machine illustrated in FIG. 1.
FIG. 6 is a view of an application unit.
FIG. 7 is an enlarged view of a portion of a row unit of the planting machine illustrated in FIG. 4.
FIG. 8 is an enlarged view of one example of an applicator.
FIGS. 9 and 10 are views of different examples of a sprayer.
FIGS 11A and 11B (collectively referred to as FIG. 11) is a block diagram showing one example of a material application control system.
FIGS. 12A, 12B, and 12C (collectively referred to herein as FIG. 12) show a flow diagram illustrating one example of the operation of the material application control system shown in FIG. 11.
FIG. 13 shows one example of the architecture illustrated in FIG. 1, deployed in a remote server environment.
FIGS. 14, 15, and 16 show examples of mobile devices that can be used as operator interface mechanisms in the architectures shown in the previous Figures.
FIG. 17 is a block diagram showing one example of a computing environment that can be used in the architectures shown in the previous Figures.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, many current systems apply material to a field. Some systems that apply material to a field include a set of actuators that actuate a set of valves or nozzles. The material to be applied to the field (which may be liquid) is pumped from a tank to the valves or nozzles through supply lines. A control system controls the actuators to actuate the valves or nozzles (to open and/or close the valves or nozzles) to allow the material under pressure to flow through the valves or nozzle, out of a spray tip or exit orifice, onto the field. Some spray tips are configured to provide a desired spray pattern, while others are fixed orifices or open tubing or outlets from a tube.

The environments in which systems apply material to a field are often dusty so that the applicators encounter dust, dirt, and other debris. It is not uncommon for moisture to accumulate on the nozzle or spray tip of an applicator and thus gather dust or other debris causing a partial or full blockage of the spray tip. Similarly, the spray tip on the applicators may be knocked off or may fall off of the applicator. Thus, instead of generating a desired spray pattern, the flow of material through the applicator is unrestricted.

In an attempt to detect the state of the applicator (such as whether the applicator is unblocked, fully blocked, partially blocked, or unrestricted), a pressure sensor may be deployed on the downstream side of the valve to detect fluid pressure downstream of the valve in the applicator. However, the signal generated by the pressure sensor may be prone to excessive noise, in some conditions, thus making it difficult to identify the state of the applicator.

The present description thus proceeds with respect to a system that obtains central flow system parameters, such as the aggregate flow of all applicators in a fluid application, a pressure generated by the pump, as well as applicator parameters such as a valve output pressure sensed by a pressure sensor disposed downstream of the valve in the applicator. Features can be extracted from these signals and the signal values and features can be applied to a machine learning-based classifier. Based upon the signal values, parameters, and features applied to the classifier, the classifier generates an output indicative of the state of the applicator, such as whether there is a partial blockage, a full blockage, no blockage, or an unrestricted flow (meaning that the spray tip may be damaged or missing), as well as a relative flow rate compared to the flow rate in other applicators. A control signal can be generated based upon the classifier output. The control signal can notify the operator of the state of the applicator, control the applicator itself, control the central flow system, or control other items.

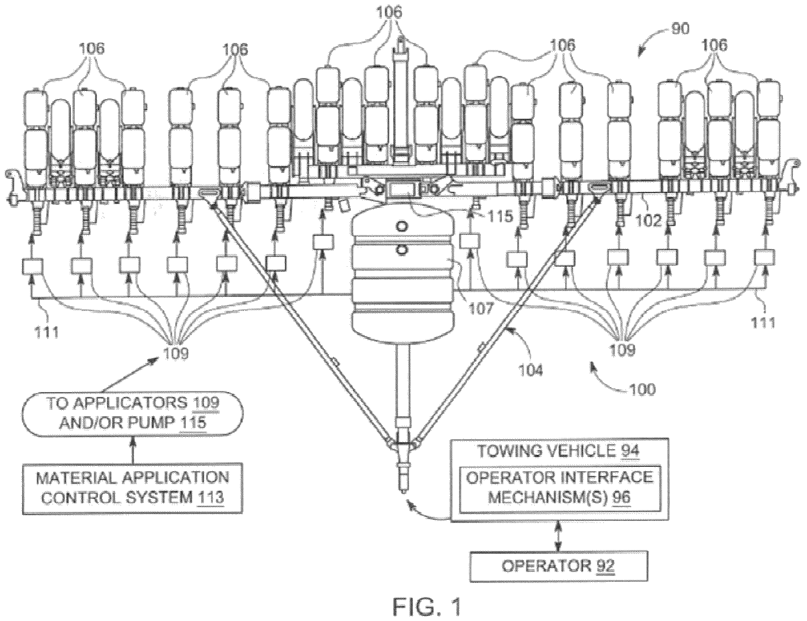

FIG. 1 is a partial pictorial, partial schematic top view of one example of an agricultural system 90 that includes agricultural planting machine 100, towing vehicle 94, that is operated by operator 92, and material application control system 113, which can be deployed on one or more individual parts of machine 100, centrally located on machine 100, remotely located, or located on towing vehicle 94. Operator 92 (which can be a manual operator or an automated operator or a semi-automated operator) can illustratively interact with operator interface mechanisms 96 to manipulate and control vehicle 94, system 113, and some or all portions of machine 100.

Machine 100 is a row crop planting machine that illustratively includes a toolbar 102 that is part of a frame 104. FIG. 1 also shows that a plurality of planting row units 106 are mounted to the toolbar 102. Machine 100 can be towed behind towing vehicle 94, such as a tractor. FIG. 1 shows that material can be stored in a tank 107 (or material(s) can be stored in a plurality of tanks) and pumped through one or more supply lines 111 so the material can be dispensed or applied in or near the rows being planted. In one example, a set of applicators 109 is provided to perform the application operation. For instance, applicators 109 can include individual pumps that service individual row units 106 and that pump material from tank(s) 107 through supply line(s) 111 so the material(s) can be dispensed on the field. In such an example, material application control system 113 controls the pumps 109. Also, applicators 109 can include actuators that actuate valves or nozzles. One or more pumps 115 pump the material from tank(s) 107 to the valves or nozzles through supply line(s) 111. In such an example, material application control system 113 controls the actuators by generating actuator control signals to apply material according to a desired pattern, e.g., to apply a continuous strip of material, to apply material in an overlapping pattern, to apply material in a spaced pattern (e.g. on a per-seed basis), or in other ways.

Material application control system 113 also receives sensor signals and other information and identifies problems with applicators 109, such as whether the applicators 109 are blocked, partially blocked, or unrestricted. Identifying such problems is described in greater detail elsewhere herein.

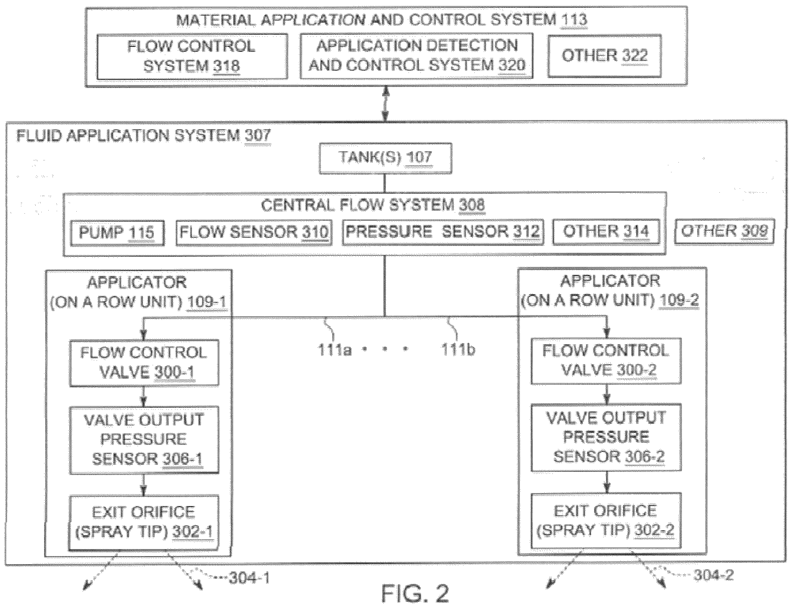

In the example shown in FIG. 2, an agricultural system or architecture 303 for a fluid application system 307 on machine 100 is illustrated in which a single tank 107 holds material that is sent to a set of applicators 109-1, 109-2 by a central flow system 308 which includes one or more pumps 115, flow sensor 310, pressure sensor 312, and other items 314. Fluid is pumped by one or more pumps 115 through a plurality of different supply lines (labeled 111A-111B in FIG. 2) to a plurality of different applicators 109-1, 109-2 on each row unit 106. Each applicator 109-1, 109-2 can have a flow control valve (300-1, 300-2) that is controlled by an actuator. Each applicator 109-1, 109-2 can also have an exit orifice defined by a spray tip 302-1, 302-1, which may be an opening in the end of a tube, a spray tip that provides a desired spray pattern, or another spray tip. The valves 300-1, 300-2 are opened to allow liquid under pressure to flow out through spray tip 302-1, 302-2 which can spray the liquid according to a spray pattern 304-1, 304-2. A valve output pressure sensor 306-1, 306-2 is deployed to sense fluid pressure downstream of valve 300-1, 300-2, but upstream of spray tip 302-1, 302-2.

In operation, the pressure generated in lines 111A, 111B by pump(s) 115 can be sensed by pressure sensor 312. The flow of material generated by pump 115 can be sensed by flow sensor 310. Pressure sensors 306-1, 306-2, and 312 can be pressure sensors or pressure transducers. Pressure sensors 306-1, 306-2 can be diaphragm sensors, manometer sensors, Bourdon tube sensor, piezoelectric sensors, strain gauge sensors, or other sensors. Flow sensor 310 can be an ultrasonic flow meter, a mass flow meter or any of a variety of other flow sensors.

FIG. 2 also shows that material application control system 113 can include flow control system 318, application detection and control system 320, and other items 322. Flow control system 318 can generate control signals which are provided to control the different applicators 109 on the different row units 106. Therefore, material application control system 113 can generate different control signals to independently control the individual applicators 109-1 and 109-2 independently of one another on each of the row units 106 so that the material from tank 107 can be applied according to a first application pattern (e.g., continuously in a furrow) using applicator 109-1 and according to a second application pattern (e.g., intermittently based upon seed position in the furrow) using applicator 109-2.

Also, in one example, application detection and control system 320 receives sensor signals from sensors 310, 312, 306-1, and 306-2, as well as other information (such as a target application rate, characteristics of the spray tips 302-1, 302-2, and/or other information), and provides that information to a machine learning-based classifier that generates an output corresponding to each applicator 109-1, 109-2 indicative of the state of that applicator, such as whether the applicator is unblocked, partially blocked, fully blocked, unrestricted, etc. In addition, application detection and control system 320 can estimate or identify the relative flow through each applicator 109-1, 109-2, and other items, and generate a control signal based upon the state of the applicator, the relative flow through the applicator, etc.

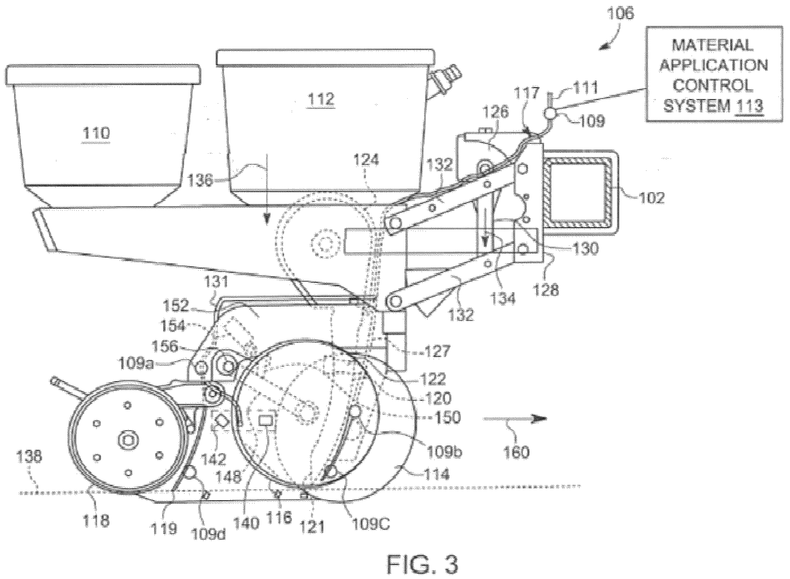

Some examples of the functionality on row units 106 will now be described with respect to FIGS. 3-8. FIG. 3 is a side view of one example of a row unit 106, with applicator 109 and system 113 shown as well. One more detailed example of applicator 109 is described elsewhere herein. FIG. 3 shows that applicator 109 can be in six possible locations labeled as 109, 109A, 109B, 109C, 109D, and 109E. It will be appreciated that row unit 106 will illustratively have a plurality of independently controllable applicators 109 (such as applicators 109-1 to 109-2 shown elsewhere herein) that can be each located at one or more of the different locations indicated by numbers 109-109E or at other locations on row unit 106. Row unit 106 illustratively includes a chemical tank 110 and a seed storage tank 112. Row unit 106 also illustratively includes one or more disc openers 114, a set of gauge wheels 116, and a set of closing wheels 118. Seeds from tank 112 are fed into a seed meter 124, e.g., by gravity or from a centralized commodity distribution system (e.g., providing pneumatic commodity distribution to each row unit). The seed meter 124 controls the rate at which seeds are dropped into a seed tube 120 or other seed delivery system, such as a brush belt or flighted belt (shown in other FIGS.), from seed storage tank 112. The seeds can be sensed by a seed sensor 122.

In the example shown in FIG. 3, liquid material is passed, e.g., pumped or otherwise forced, through one or more supply lines 111 to an inlet end of each applicator 109. Each applicator 109 is controlled by control system 113 to allow the liquid to pass from the inlet end of applicator 109 to an outlet end. Material application control system 113 senses the ground speed of row unit 106 (e.g., by sensing the ground speed of towing vehicle 94 or in another way) and varies the control signal controlling applicator 109 based on the ground speed to maintain a desired application pattern. One example of the application of material through an applicator 109 will be discussed but it will be appreciated that the row unit 106 may have a plurality of independently controllable applicators 109 so one or more materials can be applied at different rates or according to different application patterns (e.g., continuously, overlapping, intermittently, etc.). By mentioning that the different applicators are actuated to apply material according to a different application pattern it is meant, for example, that one applicator is controlled to apply material at a different rate than another applicator, or that one applicator applies material according to one spatial pattern (such as continuously, or overlapping) that is different from a spatial pattern with which another applicator applies material (such as intermittently).

As liquid passes through each applicator 109, the liquid travels through an application assembly 117 from a proximal end (which is attached to an outlet end of each applicator 109) to a distal tip (or application tip) 119, where the liquid is discharged into a trench, or proximate a trench or furrow 162, opened by disc opener 114 (as is described in more detail elsewhere). The distal tip, in one example, can include exit orifice (or spray tip) 302 shown in FIG. 2.

Some parts of row unit 106 will now be discussed in more detail. First, it will be noted that there are different types of seed meters 124, and the one that is shown is shown for the sake of example only. However, in one example, each row unit 106 need not have its own seed meter. Instead, metering or other singulation or seed dividing techniques can be performed at a central location, for groups of row units 106. The metering systems can include finger pick-up discs and/or vacuum meters (e.g., having rotatable discs, rotatable concave or bowl-shaped devices), among others. The seed delivery system can be a gravity drop system (such as seed tube 120 shown in FIG. 3 in which seeds are dropped through the seed tube 120 and fall (via gravitational force) through the seed tube and out the outlet end 121 into the seed trench 162. Other types of seed delivery systems may be or may include assistive systems, in that they do not simply rely on gravity to move the seed from the metering system into the ground. Instead, such assistive systems actively assist the seeds in moving from the meter to a lower opening, where they exit or are deposited into the ground or trench. These can be systems that physically capture the seed and move the seed from the meter to the outlet end of the seed delivery system or they can be pneumatic systems that pump air through the seed tube to assist movement of the seed. The air velocity can be controlled to control the speed at which the seed moves through the delivery system.

A downforce actuator 126 is mounted on a coupling assembly 128 that couples row unit 106 to toolbar 102. Actuator 126 can be a hydraulic actuator, a pneumatic actuator, a spring-based mechanical actuator or a wide variety of other actuators. In the example shown in FIG. 3 a rod 130 is coupled to a parallel linkage 132 and is used to exert an additional downforce (in the direction indicated by arrow 134) on row unit 106. The total downforce (which includes the force indicated by arrow 134 exerted by actuator 126, plus the force due to gravity acting on row unit 106 (and indicated by arrow 136) is offset by upwardly directed forces acting on closing wheels 118 (from ground 138) and disc opener 114 (again from ground 138). The remaining force (the sum of the force vectors indicated by arrows 134 and 136, minus the upward force on closing wheels 118 and opener 114 and the force on any other ground engaging component on the row unit (not shown), is the differential force. The differential force may also be referred to herein as the downforce margin. The downforce margin acts on the gauge wheels 116. This load can be sensed by a gauge wheel load sensor, which may be located anywhere on row unit 106 where it can sense that load. The gauge wheel load sensor can also be placed where it may not sense the load directly, but a characteristic indicative of that load. For example, it can be disposed near a set of gauge wheel control arms (or gauge wheel arm) 148 that movably mount gauge wheels 116 to shank 152 and control an offset between gauge wheels 116 and the discs in double disc opener 114, to control planting depth.

Arms (or gauge wheel arms) 148 illustratively abut against a mechanical stop (or arm contact member-or wedge) 150. The position of mechanical stop 150 relative to shank 152 can be set by a planting depth actuator assembly 154. Control arms 148 illustratively pivot around pivot point 156 so that, as planting depth actuator assembly 154 actuates to change the position of mechanical stop 150, the relative position of gauge wheels 116, relative to the double disc opener 114, changes, to change the depth at which seeds are planted.

In operation, row unit 106 travels generally in the direction indicated by arrow 160. The double disc opener 114 opens a furrow 162 in the soil 138, and the depth of the furrow 162 is set by planting depth actuator assembly 154, which, itself, controls the offset between the lowest parts of gauge wheels 116 and disc opener 114. Seeds are dropped through seed tube 120, into the furrow 162 and closing wheels 118 close the furrow 162, e.g., push soil back into the furrow 162.

As the seeds are dropped through seed tube 120, the seeds can be sensed by seed sensor 122. Some examples of seed sensor 122 are described in greater detail below. Some examples of seed sensor 122 may include an optical or reflective sensor, which includes a radiation transmitter component and a receiver component. The transmitter component emits electromagnetic radiation and the receiver component then detects the radiation and generates a signal indicative of the presence or absence of a seed adjacent the sensors. In another example, row unit 106 may be provided with a seed firmer that is positioned to travel through the furrow 162, after seeds are placed in furrow 162, to firm the seeds in place. A seed sensor can be placed on the seed firmer and generate a sensor signal indicative of a seed.

The present description proceeds with respect to the seed sensor being located to sense a seed passing it in seed tube 120, but this is for the sake of example only. Material application control system 113 illustratively receives a signal from seed sensor 122, indicating that a seed is passing sensor 122 in seed tube 120. Where an intermittent application pattern is used, system 113 then determines when to actuate applicators 109 so that material being applied through application assembly 117 (and out distal tip 119 of application assembly 117) will be applied at a desired location relative to the seed in trench or furrow 162. One brief example of the operation will be described now, by way of overview.

Material application control system 113 illustratively is programmed with, or detects a distance, e.g., a longitudinal distance, that the distal tip 119 is from the exit end 121 of seed tube 120. System 113 also illustratively senses, or is provided (e.g., by another component, such as a GPS unit or a tractor, etc.), the ground speed of row unit 106. As the row units 106 on an implement being towed by a prime mover (e.g., a tractor) may move faster or slower than the tractor during turns, particularly as the width of the implement increases, the material application control system 113 may sense, compute, or be provided the ground speed of each row unit 106 of the implement. By way of example, the material application control system 113 may sense or be provided information when the implement is turning right indicating that the rightmost row unit 106 is travelling slower, i.e., has a lower ground speed, than the leftmost row unit 106. Further, the material application control system 113 detects, is provided, or is programmed with, system data indicating the responsiveness of applicators 109 under certain conditions (such as under certain temperature conditions, certain humidity conditions, certain elevations, when spraying a certain type of fluid, etc.) and the spray angle of applicators 109, (such as the size and orientation of the spray pattern emitted by applicator 109), and system 113 also detects, is provided, or programmed with one or more properties of the material being applied through applicators 109 (as this may affect the speed at which applicators 109 respond, the time it takes for the material to travel through application assembly 117 to the distal tip 119 and be applied to furrow 162, etc.). Further, material application control system 113 illustratively detects (or is provided with a sensor signal indicative of) the forward speed of row unit 106 in the direction generally indicated by arrow 160. Application control system 113 can also obtain information indicative of the duty cycle used to control applicator 109.

With this type of information, once system 113 receives a seed sensor signal indicating that a seed is passing sensor 122 in seed tube 120, system 113 determines the amount of time it will take for the seed to drop through the outlet end of seed tube 121 and into furrow 162 to reside at its final seed location and position in furrow 162. System 113 then determines when tip 119 will be in a desired location relative to that final seed location and actuates applicators 109 using a pulse width modulated control signal with a switching frequency (given the signal duty cycle) that will apply the material at the desired location. By way of example, it may be that some material is to be applied directly on the seed. In that case, system 113 times the actuation of actuators 109 so that the applied material will be applied at the seed location. In another example, it may be desirable to apply some material at the seed location and also a predetermined distance on either side of the seed location along the furrow. In that case, system 113 generates the control signal used to control applicators 109 at a switching frequency and timing so that the material is applied in the desired fashion. In other examples, it may be that the material is to be applied at a location between seeds in furrow 162. By way of example, relatively high nitrogen fertilizer may be most desirably applied between seeds, instead of directly on the seed. In that case, system 113 has illustratively been programmed with the desired location of the applied material, relative to seed location, so that system 113 can determine when, and at what frequency, to generate the control signal to actuate applicators 109 in order to apply the material between seeds. Further, as discussed above, applicators 109 can be actuated to dispense material at a varying rate. Applicators 109 can dispense more material on the seed location and less at locations spaced from the seed location, or vice versa, or according to other application patterns. Different applicators 109 on the same row unit 106 can apply the same or different materials according to the same or different application patterns. It will be noted that a wide variety of different configurations are contemplated herein. For instance, in one example, applicators 109 may each have a valve that is provided with material through a separate supply line 111 and may have a separate distal spray tip or nozzle 119. Each applicator 109 may be placed closer to the distal spray tip or nozzle 119 (such as indicated by applicator locations 109A and 109C). In this way, there is less uncertainty as to how long it will take the material to travel from the applicators 109A and 109C to the corresponding distal spray tip or nozzle 119. In yet another example, the applicators are disposed at a different location (such as on seed tube 120) as indicated by applicators 109B and 109D. In those scenarios, again, applicator locations 109B and 109D are closer to the corresponding distal spray tip or nozzle 119B and the material may be applied before and/or after the seed drops into furrow 162. For instance, when seed sensor 120 detects a seed, system 113 may be able to actuate applicator 109B to apply material to furrow 162, before the seed exits the exit end 121 of seed tube 120 while continuously actuating a separate applicator 109D which is fed material by a separate supply line 111 from applicator 109B. However, by the time the seed drops through distal end 121 of seed tube 120, the final seed location may be directly on the material applied by applicator 109B. In yet another example, system 113 can control applicator 109B so that it applies material, but then stops applying it before the seed exits distal end 121, again while actuating applicator 109D to continuously apply material. In that case, the material may be applied continuously in the furrow 162 by applicator 109D and at a location behind the seed in furrow 162, relative to the direction indicated by arrow 160, by applicator 109B. This actuation timing and frequency enables the one or more materials to be applied between seeds, on seeds, continuously, overlapping, and/or elsewhere. All of these and other configurations are contemplated herein.

The applicator(s) 109 have a valve output pressure sensor 306 that senses the pressure downstream of the valve. The sensor signals are provided back to system 113 which generates an output indicative of whether spray tip 119 is blocked, partially blocked, missing, or operating properly, as described in greater detail elsewhere.

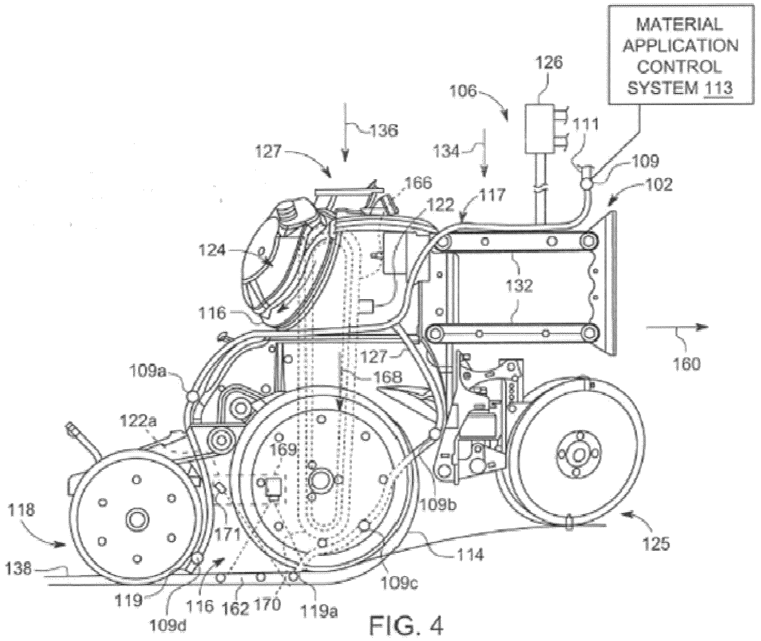

FIG. 4 is similar to FIG. 3, and similar items are similarly numbered. However, instead of the seed delivery system being a seed tube 120, which relies on gravity to move the seed to the furrow 162, the seed delivery system shown in FIG. 4 is an assistive seed delivery system 166. Also, FIG. 4 shows that row unit 106 has a row cleaner 125 which clears residue and other material ahead of opener 114. In FIG. 4, row unit 106 also has a seed hopper 127 that provides seed to seed meter 124. Assistive seed delivery system 166 also illustratively has a seed sensor 122 disposed therein.

Assistive seed delivery system 166 captures the seeds as they leave seed meter 124 and moves them in the direction indicated by arrow 168 toward furrow 162. System 166 has an outlet end 170 where the seeds exit assistive system 166, into furrow 162, where they again reach their final resting location.

FIG. 4 also shows that row unit 106 may have an optical seed sensor 122A (in addition to, or instead of, seed sensor 122) with an image capture device 169 and an illumination source 171. When the seeds are dropped into the furrow 162, the seeds can be sensed by seed sensor 122A.

Illumination source 142 may direct illumination onto an area of furrow 162. Camera 169 captures an image (or a sequence of images) of the illuminated area. An image processing system (located on sensor 122A, material application control system 113, at a remote location, and/or elsewhere) processes the image(s) to identify planting characteristics, such as seed location, seed type, seed orientation, seed (or furrow) depth, seed spacing, seed-to-soil contact, furrow integrity, anomalous material (such as rocks, plant matter, etc.), and/or other planting characteristics. The optical seed sensor 122A can be placed in a variety of different locations on row unit 106, or on different components of row unit 106, to obtain an image (or a sequence of images) of seeds in the furrow 162.

**In** a system where seed sensor 122 is used, material application control system 113 considers the speed at which delivery system 166 moves the seed from seed sensor 122 to the exit end 170. The system 113 also illustratively considers the speed at which the seed moves from the exit end 170 into furrow 162. For instance, in one example the seed simply drops from exit end 170 into furrow 162 under the force of gravity. In another example, however, the seed can be ejected from delivery system 166 at a greater or lesser speed than that which would be reached under the force of gravity. Similarly, it may be that the seed drops straight downward into furrow 162 from the outlet end 170. In another example, however, it may be that the seed is propelled slightly rearwardly from the outlet end 170, to accommodate for the forward motion of the row unit 106, so that the travel path of the seed is more vertical and so the seed rolls less once it reaches the furrow. Further, the seed can be ejected rearwardly and trapped against the ground by a trailing member (such as a pinch wheel) which functions to stop any rearward movement of the seed, after ejection, and to force the seed into firm engagement with the ground.

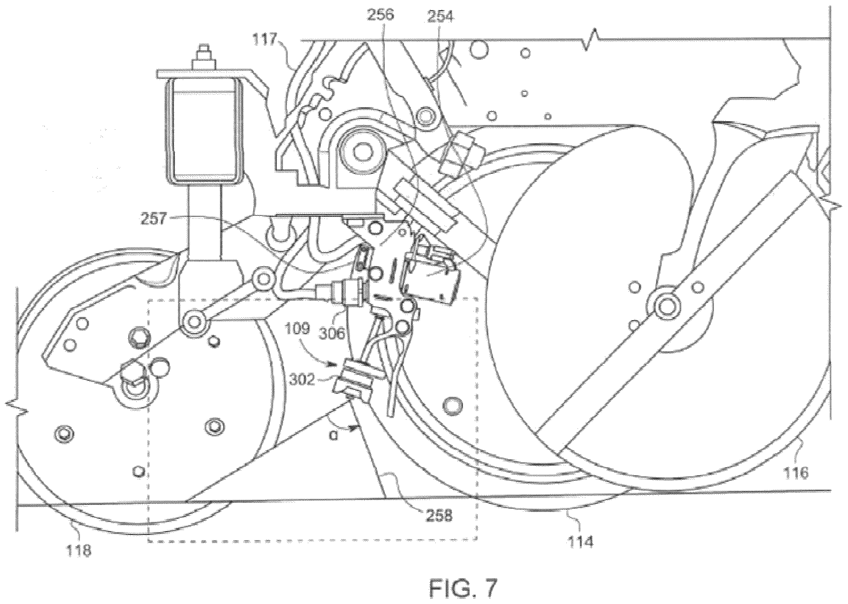

Again, FIG. 4 also shows that a plurality of applicators 109 can be placed at any of a wide variety of different locations, some of which are illustrated by numbers 109A, 109B, 109C, and 109D. In another example, as discussed in greater detail below with respect to FIG. 7, an applicator 109 can be mounted in place of or closely proximate device 169.

Where optical seed sensor 122A is used, material application control system 113 illustratively receives a signal from seed sensor 122A, indicating the planting characteristics discussed above, or other planting characteristics. Material application control system 113 can also receive a ground speed signal indicative of a speed of movement of row unit 106, and then determines when, and at what frequency, to independently actuate the different actuators in the applicators 109 on row unit 106 so that material being applied through application assemblies 117 (and out distal tips 119 of application assemblies 117) will be applied at a desired location relative to the seed in trench or furrow 162, or according to a desired application pattern, and/or based on other planting characteristics identified by processing the image(s) captured by optical seed sensor 122A. There can be a more than one seed sensor, seed sensors of different types, different locations for seed sensors, etc.

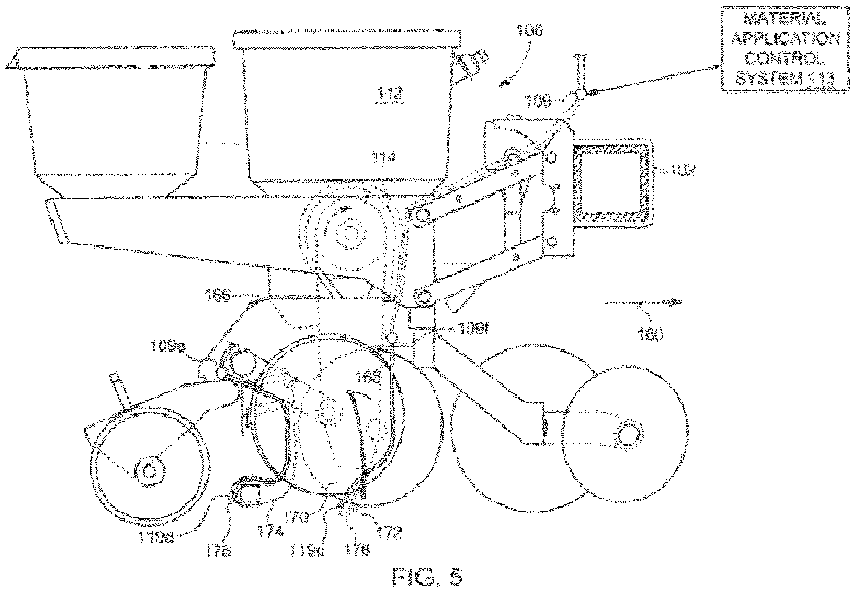

FIG. 5 is similar to FIG. 4 and similar items are similarly numbered. However, in FIG. 5, row unit 106 is also provided with members 172 and/or 174. Members 172 and/or 174 can be spring biased into engagement with the soil, or rigidly attached to the frame of row unit 106. **In** one example, member 172 can be a furrow shaper, which contacts the soil in the area within or closely proximate the furrow, and immediately after the furrow is opened, but before the seed is placed therein. Member 172 can thus contact the side(s) of the furrow, the bottom of the furrow, an area adjacent the furrow, or other areas. It can be fitted with a sensor 176, e.g., seed sensor 176, as well.

In another example, member 172 can be positioned so that member 172 moves through the furrow after the seed is placed in the furrow. In such an example, member 172 may act as a seed firmer, which firms the seed into its final seed location.

In either case, member 172 can include a seed sensor 122, which senses the presence of the seed. System 122 may be an optical sensor, which optically senses the seed presence as member 172 moves adjacent to, ahead of, or over the seed. Sensor 122 may be a mechanical sensor that senses the seed presence, or sensor 122 may be another type of sensor that senses the presence of the seed in the furrow. Sensor 122 illustratively provides a signal to material application control system 113 indicating the presence of the sensed seed.

In such an example, it may be that the plurality of applicators 109 on the row unit 106 are placed at the location of applicator 109E, shown in FIG. 5, and the spray tip or nozzle of the application assemblies corresponding to each applicator is shown at 119C. In the example shown in FIG. 5, outlet ends or nozzles 119C can be located closely behind member 172 relative to the direction indicated by arrow 160. Outlet ends or nozzles 119C can be disposed on the opposite side of member 172 as well (such as forward of member 172 in the direction indicated by arrow 160). In such an example, the seed sensor 122 senses the seed at a location that corresponds to its final seed location, or that is very closely proximate its final seed location. This may increase the accuracy with which seed sensor 122 senses the final seed location.

Also, in the example shown in FIG. 5 row unit 106 can have member 174 in addition to, or instead of, member 172. Member 174 can also be configured to engage the soil within, or closely proximate, the trench or furrow. Member 174 can have a seed sensor 122 that senses the presence of a seed (or a characteristic from which seed presence can be derived). Member 174 can be placed so that it closely follows the exit end 121 of the seed tube 120, or the exit end 170 of the assistive delivery system 166. Also, applicators 109 can be placed at the position illustrated at 109F.

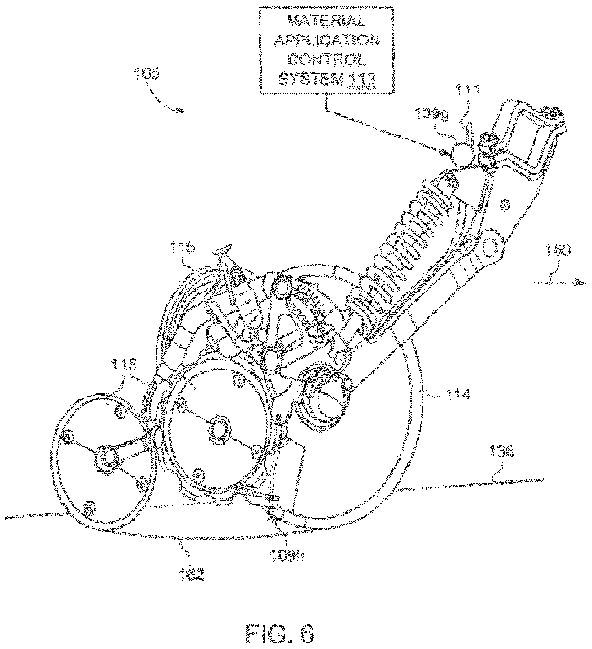

FIG. 6 is a side perspective view of an applicator unit 105. Some items are similar to those shown in other FIGS. and these items are similarly numbered. Briefly, in operation, applicator unit 105 attaches to a side-dress bar that is towed behind a towing vehicle 94, so unit 105 travels between rows (if the rows are already planted). However, instead of planting seeds, applicator unit 105 simply applies material at a location between rows of seeds (or, if the seeds are not yet planted, between locations where the rows will be, after planting). When traveling in the direction indicated by arrow 160, disc opener 114 (in this example, it is a single disc opener) opens furrow 162 in the ground 136, at a depth set by gauge wheel 116. Applicator unit 105 can have a plurality of independently controllable applicators 109. When applicators 109 are actuated, material is applied in the furrow 162 and closing wheels 118 then close the furrow 162.

As unit 105 moves, material application control system 113 controls applicators 109 to dispense material. This can be done relative to seed or plant locations, if those locations are sensed or are already known or have been estimated. Application can also be done before the seed or plant locations are known. In this latter scenario, the locations where the material is applied can be stored so that seeds can be planted later, relative to the locations of the material that has been already dispensed.

FIG. 6 shows that applicators 109 can be mounted to any of a plurality of different positions on unit 105. Two of the positions are shown at 109G and 109H. These are examples and the applicators 109 can be located elsewhere as well. Similarly, multiple applicators 109 can be disposed on unit 105 at different locations, or adjacent one another, to dispense multiple different materials or to dispense material in a more rapid or more voluminous way or to dispense the same material at different rates or according to different application patterns.

FIG. 7 shows an enlarged view of a portion of row unit 106 illustrated in FIG. 4, and similar items are similarly numbered. In FIG. 7, applicator 109 is shown having a spray tip or nozzle 302 and a valve actuator 254 that actuates a valve 300 within housing 256. The valve 300 is fed liquid material through a flow inlet 257 coupled to a conduit in application assembly 117.

When actuator 254 is actuated to open the valve 300, liquid material passes through the conduit in application assembly 117, through the valve 300, and out through nozzle 302. In the example shown in FIG. 7, nozzle 302 generates a spray pattern indicated by number 258. The spray pattern spreads over a spray angle α. FIG. 7 also shows valve output pressure sensor 306 positioned to sense fluid pressure downstream of valve 300.

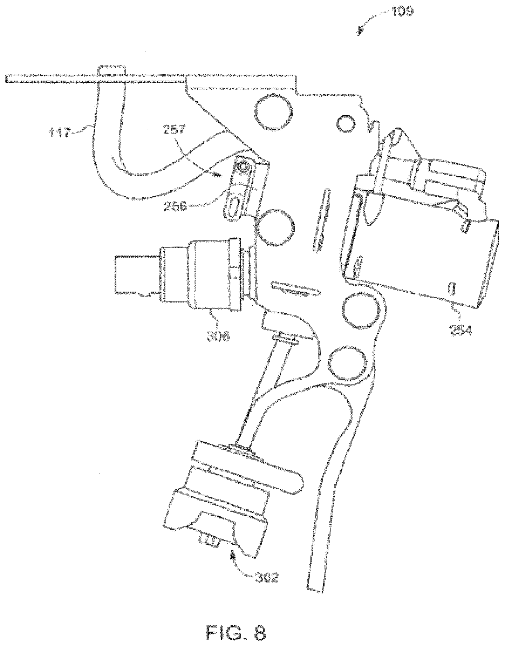

FIG. 8 is an enlarged view of applicator 109 showing flow inlet 257, valve housing 256, and actuator 254, as well as spray tip 302 and pressure sensor 306. It may happen that, because of the location of applicator 109 and the environment in which applicator 109 operates liquid and dust or debris can accumulate on spray tip 302 and block or partially block the spray tip 302.

Similarly, spray tip 302 may become damaged or get knocked off or broken off of applicator 109 resulting in unrestricted flow between valve 300 in valve housing 256 and the outlet end of applicator 109. Therefore, valve output pressure sensor 306 is disposed between valve 300/housing 256 and the nozzle or spray tip 302. The sensed pressure will change in response to actuation of valve 300 and in response to a blockage or partial blockage of spray tip 302 and/or in response to spray tip 302 being damaged or missing. A classifier or other machine learning-based processor or model in system 113 can thus detect the state of applicator 109 based on the pressure signals from sensor 306 and generate a corresponding control signal.

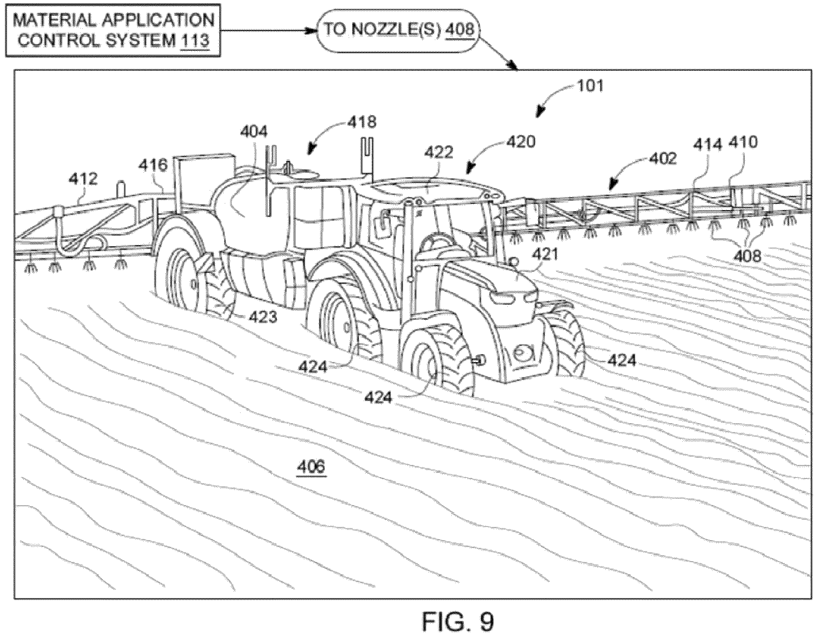

FIG. 9 illustrates another example of an agricultural spraying machine (or agricultural sprayer) 101. Sprayer 101 includes a spraying system 402 having a tank 404 containing a product, such as a liquid product, that is to be applied to field 406. Tank 404 is fluidically coupled to spray nozzles 408 by a delivery system comprising a set of conduits. A fluid pump is configured to pump the product from tank 404 through the conduits and through nozzles 408 to apply the product to the field 406. In some examples, the fluid pump is actuated by operation of a motor, such as an electric motor or hydraulic motor, that drives the pump. Material application control system 113 can generate control signals to control the nozzles 408 individually, collectively, or in groups.

Applicators on sprayer 101 can be spray nozzles 408 that are coupled to, and spaced apart along, boom 410. Nozzles 408 may be similar to applicators 109 so that the nozzles 408 have a spray tip that may become damaged, be missing or become blocked or partially blocked. Therefore, nozzles 408 may also have a valve output pressure sensor 306. The signal from sensor 306 can be used by system 113 to detect the state of the nozzle and generate corresponding control signals. Boom 410 includes arms 412 and 414 which are coupled to a center frame 416. In some examples, arms 412 and 414 can articulate and pivot relative to center frame 416. In some examples, center frame 416 can be actuated up and down to adjust its height above field 406. In some examples, arms 412 and 414 can articulate and pivot relative to center frame 416 and center frame 416 can be actuated up and down. Thus, in some examples, arms 412 and 414 are movable between a storage or transport position and an extended or deployed position (shown in FIG. 9). The boom 410, including each arm 412 and 414, can include multiple discrete and controllable sections which are supplied product from tank 404 by the fluid pump through a respective conduit of each section.

Each section can include a respective set of one or more spray nozzles 408. Each section can be activated or deactivated by material application control system 113 through the actuation of a corresponding controllable valve, for instance, a section can be deactivated, that is the section or the nozzles of the section, or both, are prevented from receiving fluid, by actuation of a controllable valve that is upstream of the section or the nozzles, or both. In some examples, the nozzles 408 of the section may each have an associated controllable valve which can be actuated by system 113 to activate or deactivate the nozzles 408. The application rate of product is the rate (volumetric rate) at which product is applied to the field over which sprayer 101 travels. The application rate corresponds to a volumetric flow rate of the product from the tank 404 through the spray nozzles 408. The volumetric flow rate can be controlled by system 113 controlling operation of the pump, such as by varying the speed of actuation of the pump with an associated motor. In some examples, where the application rate is controlled for individual sections or for individual nozzles 408, a controllable valve, such as solenoid valve, a piezo valve, or the like, that corresponds to each section or to each nozzle 408, can be operable to reciprocate (e.g., pulse) between a closed state and an open state at variable frequency (e.g., pulse width modulation control) to control the rate at which the product is discharged from the set of spray nozzles 408 of the respective section or from the respective individual spray nozzle 408.

In the example illustrated in FIG. 9, agricultural sprayer 101 comprises a towed implement 418 that carries the spraying assembly, and a towing or support machine 420 (illustratively a tractor) that tows the towed spraying implement 418. Towed implement 418 includes a set of ground engaging elements, such as wheels 423. Towing machine 420 includes a power plant 421, such as internal combustion engine that drives rotation of a set of ground engaging elements, such as wheels 424, to propel the sprayer 101 over field 406 at variable speeds. The ground engaging elements can also be tracks, or other traction elements as well. In the example illustrated, towing machine 420 includes an operator compartment or cab 422, which can include a variety of different operator interface mechanisms for controlling agricultural sprayer 101. Agricultural sprayer 101 can include a variety of sensors, such as one or more ground speed sensors that may be located on towed implement 418 and/or on towing machine 420. The ground speed sensor(s) sense ground speed and generate a sensor signal, indicative of the sensed ground speed, to material application control system 113.

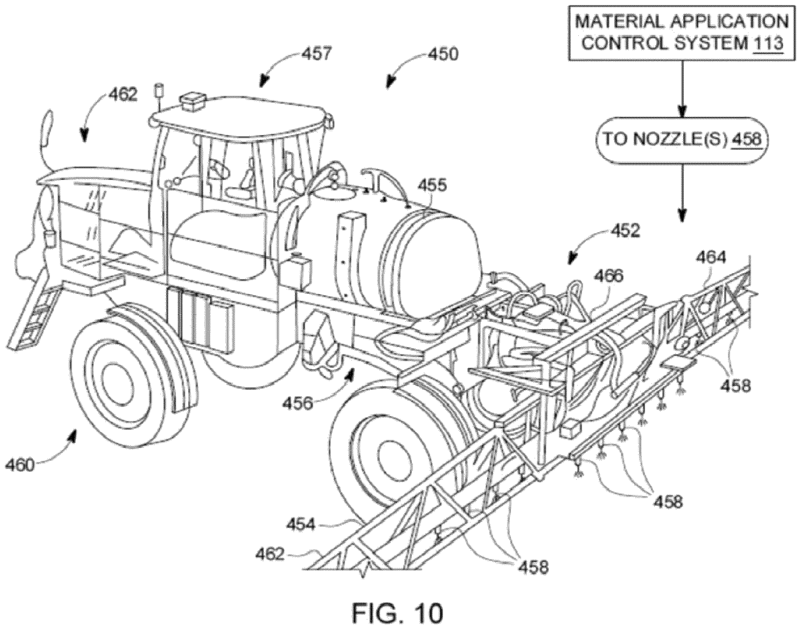

FIG. 10 illustrates one example of an agricultural sprayer 450 that is self-propelled. Sprayer 450 has an on-board spraying system 452, including, among other things, a tank 455 containing a product and a boom 454, that is carried on a machine frame 456 having an operator compartment 457, a set of ground engaging elements 460, such as wheels or tracks, and a power plant 462, such as an internal combustion engine, that drives rotation of ground engaging elements 460 to propel sprayer 450 over the worksite (field) at which it operates. Operator compartment 457 can include a variety of different operator interface mechanisms for controlling agricultural sprayer 450. Tank 455 is fluidically coupled to spray nozzles 458 by a delivery system comprising a set of conduits. A fluid pump is configured to pump the product from tank 455 through the conduits and through nozzles 458 to apply the product to the field over which agricultural sprayer 450 travels. In some examples, the fluid pump is actuated by operation of a motor, such as an electric motor or hydraulic motor, that drives the pump and that is controlled by material application control system 113.

Spray nozzles 458 are coupled to, and spaced apart along, boom 454. Spray nozzles 458 can be configured similarly to spray nozzles 408 so that system 113 can detect the state of the spray nozzles (e.g., blocked, partially blocked, unrestricted, etc.). Boom 454 includes arms 462 and 464 which are coupled to a center frame 466. In some examples, arms 462 can articulate or pivot relative to center frame 466, such as by actuation of one or more actuators. Thus, arms 462 and 464 are movable between a storage or transport position and an extended or deployed position (shown in FIG. 10). In some examples, center frame 466 can be actuated up and down (by one or more actuators) to change a height of center frame 466 above the worksite. The boom 454, including each arm 462 and 464, can include multiple discrete and controllable sections which are supplied product from tank 455 by the fluid pump through a respective conduit of each section.

Each section can include a respective set of one or more spray nozzles 458. Each section can be activated or deactivated by control signals generated from material application control system 113 that actuate a corresponding controllable valve, for instance, a section can be deactivated, that is the section or the nozzles 458 of the section, or both, are prevented from receiving fluid, by actuation of a controllable valve that is upstream of the section or the nozzles, or both. In some examples, the nozzles 458 of the section may each have an associated controllable valve 300, valve output pressure sensor 306, and spray tip 302. The valve 300 can be actuated by material application control system 113 to activate or deactivate the nozzles 458. The application rate of product is the rate (volumetric rate) at which product is applied to the field over which sprayer 450 travels. The application rate corresponds to a volumetric flow rate of the product from the tank 455 through the spray nozzles 458. The volumetric flow rate is controlled by operation of the pump, such as by varying the speed of actuation of the pump with an associated motor. In some examples, where material application control system 113 controls the application rate for individual sections or for individual nozzles 458, a controllable valve 300, such as solenoid valve, a piezo valve, or the like, that corresponds to each section or to each nozzle 458, can be controlled by system 113 to reciprocate (e.g., pulse) between a closed state and an open state at variable frequency (e.g., pulse width modulation control) to control the rate at which the product is discharged from the set of spray nozzles 458 of the respective section or from the respective individual spray nozzle 458.

Agricultural sprayer 450 can include a variety of sensors, such as a ground speed sensor that senses the ground speed of sprayer 450 and /or of individual nozzles 458 or one or more sets of nozzles 458. Material application control system 113 receives the signals generated by the ground speed sensor(s) and varies the control signal(s) used to control actuation of the valves in nozzles 458, based on the ground speed, to maintain a target application pattern. System 113 can also detect the state of each nozzle 458 based on the signal from valve output pressure sensors 306, and generate corresponding control signals.

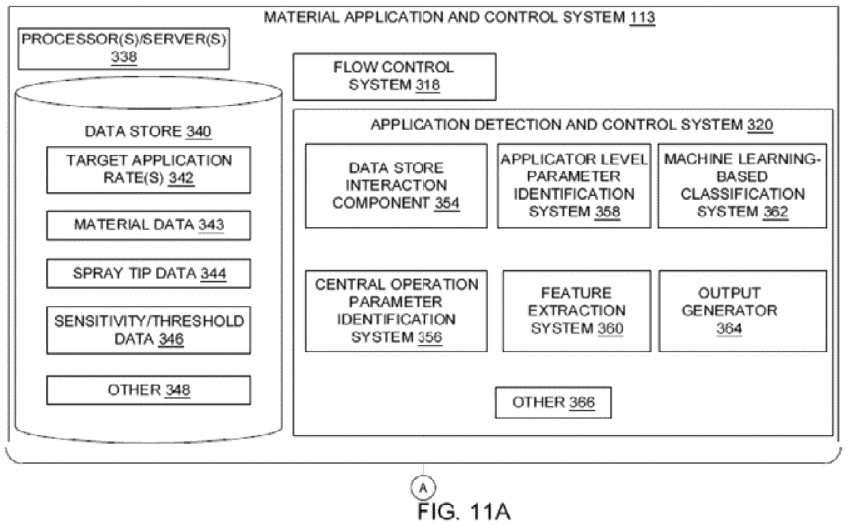

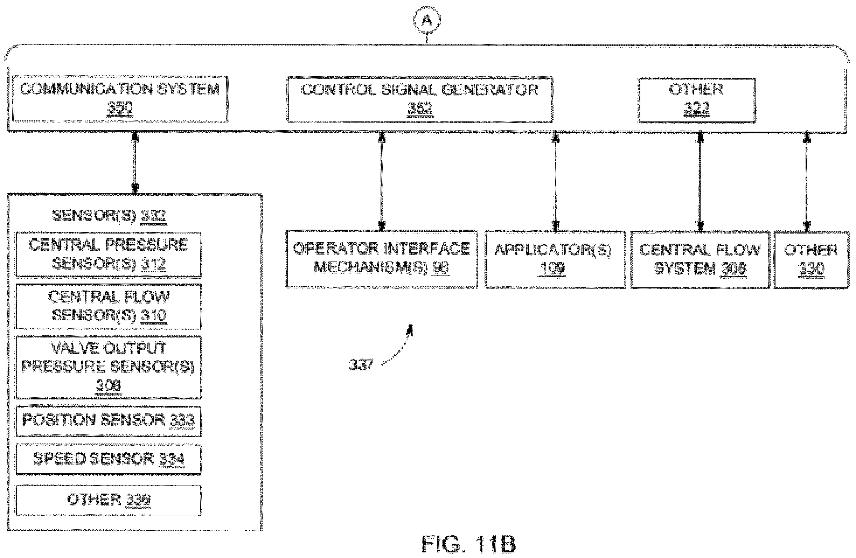

FIG. 11 is a block diagram showing one example of material application and control system 113 in more detail. Some items are similar to those shown in previous figures, and they are similarly numbered. FIG. 11 shows that material application and control system 113 can be in communication with operator interface mechanisms 96, applicators 109 (which may include the various nozzles 408 and 458 as well as other applicators), central flow system 308, and other items 330. FIG. 11 also shows that material application and control system 113 can communicate with one or more sensors 332 which can include central pressure sensors 312, central flow sensors 310, valve output pressure sensors 306, a position sensor 333, a speed sensor 334, and any of a wide variety of other sensors 336.

FIG. 11 also shows that material application and control system 113 can include one or more processors or servers 338, data store 340 (which can store one or more target application rates 342, material data 343, spray tip data 344, sensitivity/threshold data 346, and any of a wide variety of other data 348), communication system 350, fluid control system 318, application detection and control system 320, control signal generator 352, and any of a wide variety of other functionality 322. Application detection and control system 320 can include data store interaction component 354, central operation parameter identification system 356, applicator level parameter identification system 358, feature extraction system 360, machine learning-based classification system 362, output generator 364, and any of a wide variety of other items 366. Before describing the overall operation of material application and control system 113 in more detail, a description of some of the items in agricultural system 337, and their operation, will first be described.

The one or more target application rates 342 may identify the rate of material application that should be applied by fluid application system 307 in the field over which the applicators are traveling. The target application rates 342 may be georeferenced rates so that the rate at which material is applied may change based upon the geographic location of the applicators. Thus, the target application rates 342 may be downloaded in the form of an application map, or target application rates 342 may be input by an operator or detected or received in other ways. Material data 343 may identify characteristics of the material being applied by the applicators. For instance, material data 343 may describe the fluid properties (e.g., specific gravity, density, etc.) of the material being applied, among other things.

Spray tip data 344 may identify the type of spray tip 302 (e.g., an outlet of a tube, a fixed or variable orifice, a spray tip designed to provide a desired pattern, etc.) that is being used to apply material. Spray tip data 344 may identify the size of the spray tip, the type of spray angle or spray pattern 258 emitted by the spray tip 302, the orifice size or other dimensions or characteristics of the spray tip 302. Spray tip data 344 may be default data or data downloaded from a remote system. Spray tip data 344 may be input by the operator or received in other ways as well.

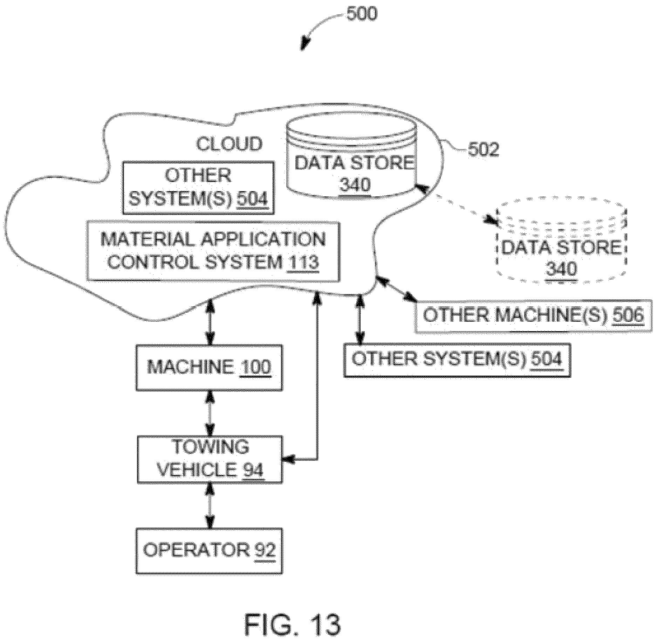

Sensitivity/threshold data 346 may identify one or more thresholds used in determining the state of a particular applicator. For instance, the pressure sensed by valve output pressure sensor 306 may be compared to the pressure sensed by other valve output pressure sensors 306 on other applicators. The difference may be compared to a sensitivity or threshold level identified by sensitivity/threshold data 346 to determine whether the state of the particular applicator 109 should be identified or flagged or otherwise analyzed. By way of example, if the pressure sensed by a first valve output pressure sensor 306-1 varies from the pressure sensed by a second valve output pressure sensor 306-2 by a threshold amount (e.g., 20%), this may indicate that there is a problem with one of the two valve output pressure sensors 306-1 and/or 306-2 so that the state of the corresponding applicators 109-1 and 109-2 should be analyzed. Sensitivity/threshold data 346 may be default data, may be downloaded from a remote system, may be input by an operator, and/or may be obtained or received in other ways. Communication system 350 facilitates the communication of items in material application and control system 113 with one another and may facilitate communication with other systems or other machines (such as those described with respect to FIG. 13 below). Therefore, communication system 350 may be a controller area network (CAN) bus and bus controller, a cellular communication system, a near field communication system, a Bluetooth or Wi-Fi communication system, a wide area network communication system, a local area network communications system, or any of a wide variety of other communication systems or combinations of systems.

Flow control system 318 illustratively provides an output to control signal generator 352 to generate control signals to control the flow control valves 300 on applicators 109 based upon the target application rate 342, the spray tip data 344, the fluid data 343, and/or other data. Flow control system 318 may identify the switching frequency and provide the switching frequency to control signal generator 352 which, in turn, generates a pulse width modulated control signal to control the flow control valves 300 in applicators 109 in order to provide application of material according to a target rate, a target application pattern, or other target data. The control signals can take other forms as well.

Application detection and control system 320 may receive sensor signals from one or more sensors 332 and detect the state of one or more applicators 109 (such as whether the applicators 109 are functioning properly, partially blocked, fully blocked, have unrestricted flow - indicating that the spray tip 302 is missing, or other states). Data store interaction component 354 interacts with data store 340 to obtain data or other information needed by application detection and control system 300 in order to identify the state of different applicators 109. Data store interaction component 354 can interact with local data store 340 or remote data stores using communication system 350 or in other ways. Central operation parameter identification system 356 identifies parameters of central flow system 308 where those parameters (or features derived from those parameters) may be used by machine learning-based classification system 362 in order to identify the state of one or more applicators 109. Thus, central operation parameter identification system 356 can identify the overall flow from tank 107 to all applicators 109 controlled by central flow system 308 by reading the sensor signal generated by flow sensor 310. Central operation parameter identification system 356 can also identify the system pressure of fluid output by pump 115 by reading the sensor signal generated from central pressure sensor 312.

Applicator level parameter identification system 358 identifies row level parameters or applicator-specific parameters corresponding to the applicators 109. Thus, applicator level parameter identification system 358 can identify the pressure at the output of each flow control valve 300 by reading the sensor signal generated by valve output pressure sensors 306. Applicator level parameter identification system 358 can also correlate those pressure signals with the valve commands generated by flow control system 318. Applicator level parameter identification system 358 can identify other applicator level parameters as well.

Features extraction system 360 can obtain the various sensor signals, and other inputs from both central flow system 308 and the individual applicators or sets of applicators 109 and extract features that may be useful to machine learning-based classification system 362. Thus, feature extraction system 360 can analyze the pressure pulses from the various pressure sensors 312, 306, to identify pulse characterization features. Such features may indicate the graphical area corresponding to different portions of the pressure pulse defined by the pressure signals, any overshoot or undershoot in the pressure pulses, characteristics of the pressure signal decay, the steady state pressure level before the corresponding valve 300 is closed, the low pressure level or steady state pressure level before current is applied to the flow control valve 300 to open the valve, or any of a wide variety of pulse characterization features. Feature extraction can be performed using any of a wide variety of different types feature extraction algorithms or models. Feature extraction can be performed by components such as classification algorithms, prediction algorithms, clustering algorithms, or other feature extraction algorithms. The features may be numerical, categorical, ordinal, binary, textual, or other features. Machine learning-based classification system 362 receives the features extracted by feature extraction system 360 as well as any or all of the parameters identified by central operator parameter identification system 356 and applicator level parameter identification system 358 and/or the sensor signals themselves. Machine learning-based classification system 362 may receive other information (such as data from data store 340, the sensor signals from the various sensors 342, the geographic position of the machine, the valve control signals generated by flow control system 318, and/or any of a wide variety of other information). Machine learning-based classification system 362 classifies the inputs to generate an output indicative of the state of one or more applicators 109 under analysis. The state of an applicator 109 under analysis may identify that the applicator 109 is blocked, partially blocked, missing a spray tip, functioning properly, etc. The classification may also identify that the flow rate of the material being applied by the applicator is above normal, normal, below normal, or classified in another way relative to the flow rate of other applicators 109 or relative to an expected flow rate. Machine learning-based classification system 362 can include a neural network, a deep neural network, an artificial intelligence model (such as a large language model classifier), a rules-based classifier a rules based classifier where the rules are generated by a neural network or large language model, or another type of classification algorithm or classification model. Based upon the classification output by machine learning-based classification system 362, output generator 364 generates an output to control signal generator 352 so that control signal generator 352 can generate a control signal based upon the classification.

Control signal generator 352 can generate a control signal to control operator interface mechanisms 96. For instance, control signal generator 352 can generate a control signal to control an operator interface output mechanism, such as a screen, an alarm, or any other mechanism for providing an audio, visual, or haptic output to an operator. The output may identify the applicator. The output may identify the state of a particular applicator 109. The output may identify a potential problem (such as a blocked applicator, a partially blocked applicator, an applicator where the spray tip is missing, etc.). The output may provide tutorial information identifying how an operator may verify and/or fix any corresponding problem. The output can include a wide variety of other outputs as well.

Control signal generator 352 may generate a control signal to control one or more applicators 109. For instance, where an applicator is partially blocked, the control signal may instruct flow control system 318 to increase the frequency with which the corresponding valve 300 is actuated in order to increase the flow rate from the applicator 109, even though it is partially blocked, the control signal may control flow control system 318 to reduce the frequency of actuation of a valve 300 where the applicator 109 is missing the spray tip 302. Other control signals for controlling applicator 109 can be generated as well.

Control signal generator 352 can generate a control signal to control central flow system 308. For instance, the control signal can be used to control pump 115 to increase or decrease system pressure, to stop pumping, or to control central flow system 308 in other ways.

Control signal generator 352 can generate control signals to control communication system 350 to communicate the state of the various actuators to other systems, other machines, etc. For instance, where an applicator is clogged or has a missing spray tip 302, control signal generator 352 may control the communication system 350 to communicate with a vendor indicating that a new spray tip 302 is needed to replace the damaged or missing spray tip. Control signal generator 352 can generate any of a wide variety of other control signals as well.

While some of the sensors 332 have been described elsewhere herein, position sensor 333 may be a sensor that generates an output indicative of the location of position sensor 333 in a local or global coordinate system. Therefore, position sensor 333 can be a global navigation satellite system (GNSS) receiver, a dead reckoning system, a cellular triangulation system, or any of a variety of other position sensors. Speed sensor 334 senses the speed of one or more applicators 109 over the ground over which the machine is travelling. Therefore, speed sensor 334 can be a speedometer, a sensor that senses the speed of rotation of an axle or a wheel or a drive shaft or other transmission, or a sensor that generates an output indicative of the speed of the applicator 109 based upon the input from other sensors. For instance, speed sensor 334 may receive a plurality of outputs from position sensor 333 and calculate the speed of the applicator based upon the change in position over time. Sensors 332 can include any of a wide variety of other sensors 336 as well.

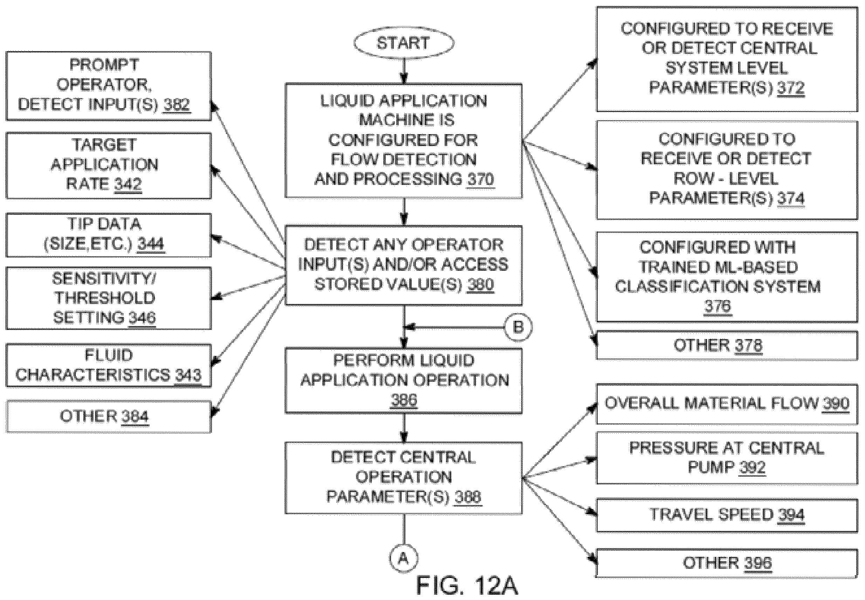

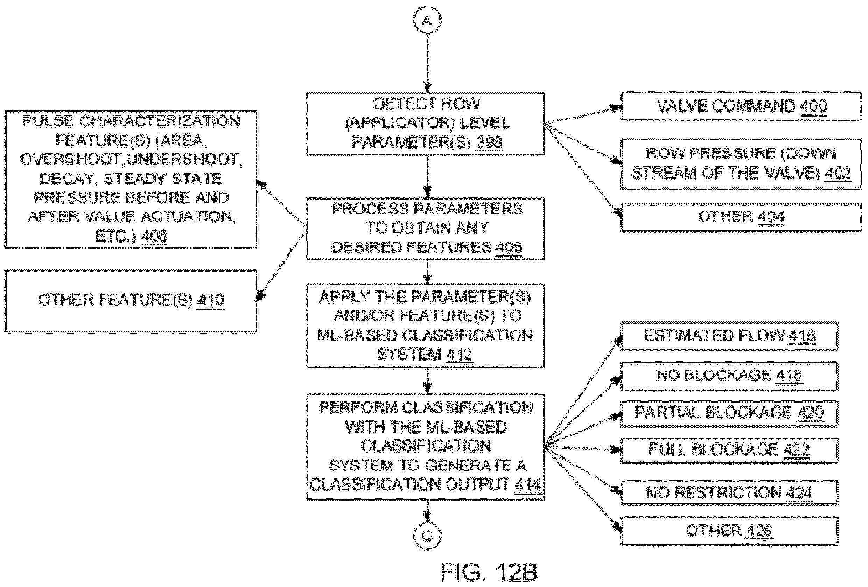

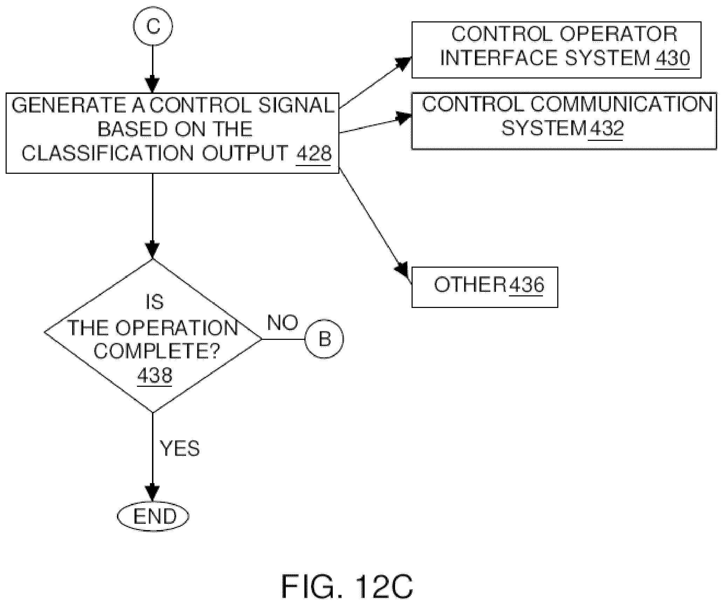

FIGS. 12A, 12B, and 12C (collectively referred to herein as FIG. 12) illustrate a flow diagram showing one example of the operation of material application and control system 113 in identifying the state of one or more applicators 109 and generating control signals. It is first assumed that the liquid application machine is configured for flow detection and processing, as indicated by block 370 in the flow diagram of FIG. 12. For example, the machine is configured to receive or detect system level parameters (e.g., using central operation parameter identification system 356), as indicated by block 372. The system 113 is configured to receive or detect row-level parameters (such as using applicator level parameter identification system 358) as indicated by block 374 in the flow diagram of FIG. 12. The system may also illustratively be configured with a trained machine learning-based classification system 362, as indicated by block 376 in the flow diagram of FIG. 12. The system or machine may be configured in other ways as well, as indicated by block 378 in the flow diagram of FIG. 12.

Application detection and control system 320 also detects any operator inputs and/or uses data store interaction component 354 to access any stored values that may be needed to classify the state of an applicator, as indicated by block 380 in the flow diagram of FIG. 12. In one example, system 320 prompts the operator to enter values (such as the target application rate 342, material data 343, spray tip data 344, sensitivity/threshold data 346, or other data) and detects the operator inputs providing that information. Prompting the operator and detecting inputs is detected by block 382 in the flow diagram of FIG. 12. As mentioned, the data or stored values can include the target application rate 342, spray tip data 344, sensitivity/threshold setting data 346, fluid characteristics or material data 343, and/or any of a wide variety of other data 384. Machine 90 is then controlled (by an automated operator, a human operator, or a semi-automated operator) to perform a liquid application operation, as indicated by block 386 in the flow diagram of FIG. 12. The control signals for controlling pump 115 and/or valves 300 can be generated based on a variety of different parameters or criteria, such as seed population, dose volume, ground speed, application pattern, etc. Central operation parameter identification system 356 detects operating parameters from the central flow system 308, as indicated by block 388 in the flow diagram of FIG. 12. The central operating parameters may include the overall material flow sensed by central flow sensors 310, as indicated by block 390 in the flow diagram of FIG. 12. The central operation parameters can be the pressure generated by pump 115 and sensed by central pressure sensor 312, as indicated by block 392 in the flow diagram of FIG. 12. The central operation parameters may include travel speed as indicated by block 394 in the flow diagram of FIG. 12. The central operation parameters can include any of a wide variety of other parameters 396.

Applicator level parameter identification system 358 then detects any row level or applicator level parameters, as indicated by block 398 in the flow diagram of FIG. 12. Such parameters can include the valve command, as indicated by block 400, the row pressure (downstream of the valve 300) as represented in the sensor signal generated by valve output pressure sensors 306, and as indicated by block 402 in the flow diagram of FIG. 12. Further, the valve command signal 400 can be used to separate or otherwise identify the pressure pulses in the sensed row pressure 402. Because the valve command signals 400 may be current signals generated by control signal generator 352, signals 400 may be predictable and consistent and thus improve the accuracy in identifying row pressure pulses. The row or applicator level parameters can include any of a wide variety of other parameters 404. It will also be noted that the control system pressure at pump 115 and the row level pressures can be sensed or sampled at different frequencies. For instance, the central pump pressure may be sensed or sampled at a frequency of 100 Hz while the row level pressure may be sensed or sampled at 10kHz. These are examples only.

Feature extraction system 360 can then process the parameters or other data to obtain any desired features that may be used by machine learning-based classification system 362. Obtaining such features is indicated by block 406 in the flow diagram of FIG. 12. The features may include such things as the pulse characterization features 408 (e.g., pulse area, decay characteristics, overshoot, undershoot, steady state pressure before and after valve actuation, etc.). The features may include any of a wide variety of other features 410. Further, the control system pressure values can be used to scale the row level pressure values or vice versa. The scaled values can then be used in the remainder of the processing, as one example.

The signals, parameters, and/or features are then applied to the machine learning-based classification system 362, as indicated by block 412 in the flow diagram of FIG. 12. Machine learning-based classification system 362 then performs classification to generate a classification output, as indicated by block 414. The classification output may indicate the estimated relative flow of material through an applicator, as indicated by block 416, the state of the applicator such as no blockage 418, partial blockage 420, full blockage 422, or no restriction (indicating that the spray tip 302 may be missing) as indicated by block 424, or any of a wide variety of other classification outputs, such as an upstream restriction (e.g. a pinched supply line), an incorrectly installed tip size, or others, as indicated by block 426.

Based upon the classification output by system 362, output generator 364 generates an output to control signal generator 352 which can generate a control signal based upon the classification output, as indicated by block 428 in the flow diagram of FIG. 12. The control signal can be used to control the operator interface mechanisms, as indicated by block 430. The control signal can be used to control the communication system 350, as indicated by block 432. The control signals can be used to perform any of a wide variety of other control operations as well, as indicated by block 436.

Until the application operation is complete, as determined at block 438, processing reverts to block 386 where the system continues to perform the liquid application operation and detect the various parameters and features, etc.

It can thus be seen that the present system automatically detects the state of an applicator. The state can identify the relative flow of material through the applicator, whether the applicator is blocked or partially blocked, whether the spray tip is missing, among other things. This can be used to generate control signals such as to notify the operator, control the applicator, control the application system, among other things. By automatically it is meant, in one example, that the operation or process can be performed without further human involvement except, perhaps, to initiate or authorize the operation or process.

The present discussion has mentioned processors and servers. In one example, the processors and servers include computer processors with associated memory and timing circuitry, not separately shown. The processors and servers are functional parts of the systems or devices to which they belong and are activated by, and facilitate the functionality of the other components or items in those systems.

It will be noted that the above discussion has described a variety of different systems, components, generators, sensors, and/or logic. It will be appreciated that such systems, components, generators, sensors, and/or logic can be comprised of hardware items (such as processors and associated memory, or other processing components, some of which are described below) that perform the functions associated with those systems, components, generators, sensors, and/or logic. In addition, the systems, components, generators, sensors, and/or logic can be comprised of software that is loaded into a memory and is subsequently executed by a processor or server, or other computing component, as described below. The systems, components, generators, sensors, and/or logic can also be comprised of different combinations of hardware, software, firmware, etc., some examples of which are described below. These are only some examples of different structures that can be used to form the systems, components, generators, sensors, and/or logic described above. Other structures can be used as well.

Also, a number of user interface (UI) displays have been discussed. The UI can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, they can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which they are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components. FIG. 13 is a block diagram of the architecture, shown in FIG. 1, except that planter 100 communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in FIG. 11 as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 13, some items are similar to those shown in FIGS. 1-12 and they are similarly numbered. FIG. 13 specifically shows that material application control system 113 and data store (or other items in agricultural system 90) can be located at a remote server location 502. Therefore, parts of system 113 can access those systems through remote server location 502. FIG. 13 also shows that other machines 506 and/or other systems 504 can communicate with remote server environment 502.

FIG. 13 also depicts another example of a remote server architecture. FIG. 13 shows that it is also contemplated that some elements of FIGS. 2 and 11 can be disposed at remote server location 500 while others are not. By way of example, data store can be disposed at a location separate from location 500, and accessed through the remote server at location 500. Regardless of where the elements are located, the elements can be accessed directly by system 113, through a network (either a wide area network or a local area network), the elements can be hosted at a remote site by a service, or they can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the planter or sprayer comes close to the fuel truck for fueling, the system automatically collects the information from the planter or sprayer using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the planter or sprayer until the planter or sprayer enters a covered location. The planter or sprayer, itself, can then send the information to the main network.

It will also be noted that the elements of FIGS. 2 and 11, or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

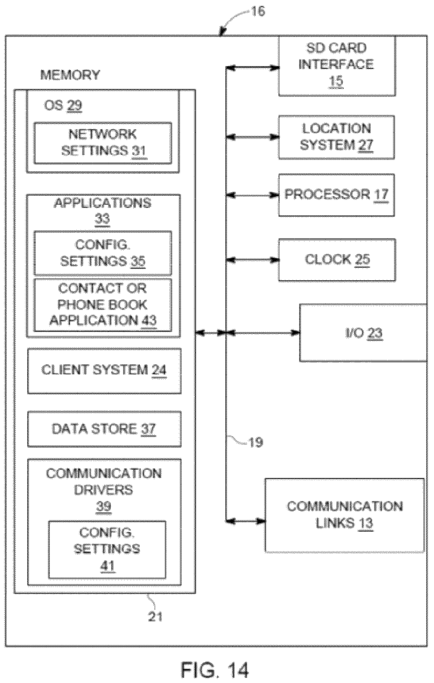

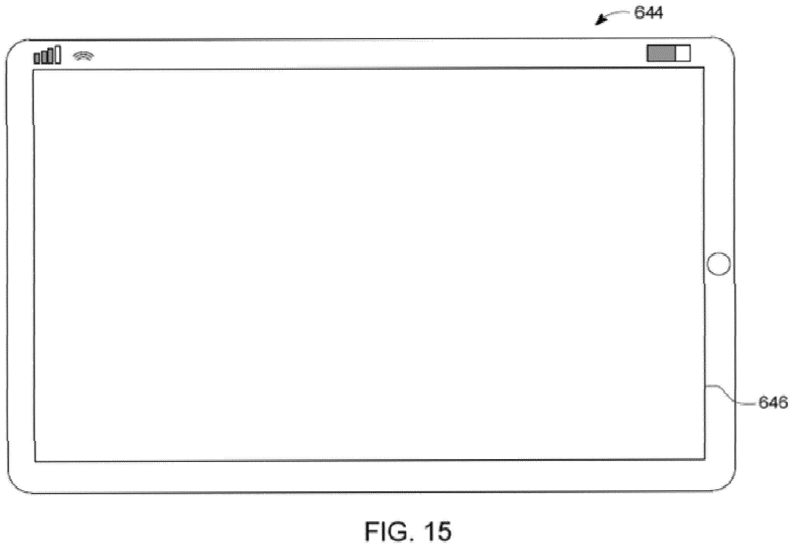

FIG. 14 is a simplified block diagram of one illustrative example of a handheld or mobile computing device that can be used as a user's or client's handheld device 16, in which the present system (or parts of it) can be deployed. For instance, a mobile device can be deployed in the operator compartment of towing vehicle 94 for use in generating, processing, or displaying the application data. FIGS. 15-16 are examples of handheld or mobile devices.

FIG. 14 provides a general block diagram of the components of a client device 16 that can run some components shown in FIGS. 2 and 11, that interacts with those components, or both. In the device 16, a communications link 13 is provided that allows the handheld device to communicate with other computing devices and in some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a GNSS, a dead reckoning system, a cellular triangulation system, or other positioning system. Location system 27 can also include, for example, mapping software or navigation software that generates desired maps, navigation routes and other geographic functions. Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 15 shows one example in which device 16 is a tablet computer 644. In FIG. 24, computer 644 is shown with user interface display screen 646. Screen 646 can be a touch screen or a pen-enabled interface that receives inputs from a pen or stylus. Computer 644 can also use an on-screen virtual keyboard. Of course, computer 644 might also be attached to a keyboard or other user input device through a suitable attachment mechanism, such as a wireless link or USB port, for instance. Computer 644 can also illustratively receive voice inputs as well.

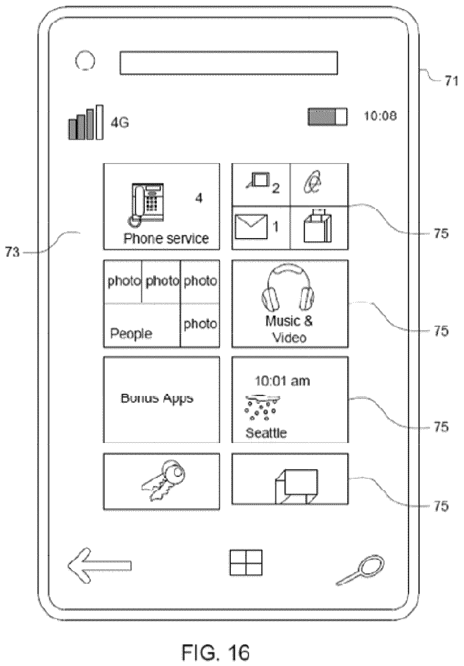

FIG. 16 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

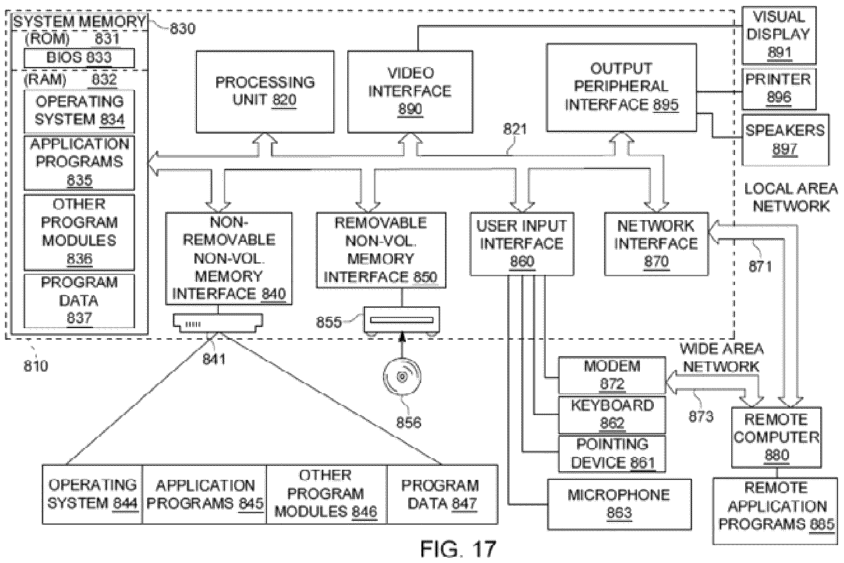

FIG. 17 is one example of a computing environment in which elements of FIG. 11, or parts of it, (for example) can be deployed. With reference to FIG. 17, an example system for implementing some embodiments includes a computing device in the form of a computer 810 programmed to operate as described above. Components of computer 810 may include, but are not limited to, a processing unit 820 (which can comprise processors or servers from previous Figures), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to FIGS. 2 and 11 can be deployed in corresponding portions of FIG. 17.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium, which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 16 illustrates operating system 834, application programs 835, other program modules 836, and program data 837.

The computer 810 may also include other removable/non-removable volatile/nonvolatile computer storage media. By way of example only, FIG. 17 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 17, provide storage of computer readable instructions, data structures, program modules and other data for the computer 810. In FIG. 17, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895. The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. **In** a networked environment, program modules may be stored in a remote memory storage device. FIG. 17 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

## Claims

1. An agricultural system (90), comprising:
an application machine (100) having a plurality of applicators (109) that apply liquid to a field, each applicator (109) having a controllable valve (300), that opens to pass liquid through the valve (300), and a spray tip (302) that receives the liquid that passes through the valve (300) and that applies the liquid to the field;
a plurality of applicator pressure sensors (306), each applicator pressure sensor (306) being mounted to a corresponding applicator (109) and being configured to sense liquid pressure between the controllable valve (300) and the spray tip (302) of the corresponding applicator (109);
a central flow system (308) configured to pump the liquid from a reservoir (107) to the plurality of applicators (109);
an application detection and control system (320) configured to generate an applicator parameter for each applicator (109) based on the liquid pressure sensed by the corresponding applicator pressure sensor (306);
a machine learning-based (ML-based) classification system (362) configured to generate a classification output indicative of a state of the applicator (109) based on the applicator parameter; and
a control signal generator (352) configured to generate a control signal based on the classification output.

2. The agricultural system (90) of claim 1, wherein the ML-based classification system (362) comprises:
an artificial neural network.

3. The agricultural system (90) of claim 1 or 2, wherein the ML-based classification system (362) comprises:
a rules-based classifier.

4. A computer implemented method comprising an agricultural system (90) according to one of the claims 1 to 3, further comprising:
Detecting (398) a liquid pressure in the applicator (109) down stream of the applicator flow control valve (300) and upstream of an applicator spray tip (302) on an agricultural application machine (100);
Generating (402) a pressure signal based on the detected liquid pressure;
Generating (406) an applicator parameter based on the pressure signal;
Applying (412) the applicator parameter to the machine learning-based (ML-based) classification system (362);
Generating (414) a classification output, with the ML-based classification system, indicative of a state of the applicator (109) based on the applicator parameter; and
Generating (428) a control signal based on the classification output.

5. The computer implemented method of claim 4, wherein generating a classification output comprises:
Generating (422) the classification output indicative of whether the applicator spray tip (302) is blocked.

6. The computer implemented method of claim 4 or 5, wherein generating a classification output comprises:
Generating (420) the classification output indicative of whether the applicator spray tip (302) is partially blocked.

7. The computer implemented method of one of the claims 4 to 6, wherein generating a classification output comprises:
Generating (424) the classification output indicative of whether the applicator spray tip (302) is missing.

8. The computer implemented method of one of the claims 4 to 7, and further comprising:
Extracting (408) features from the pressure signal;
Applying (412) the features with the applicator parameter to the ML-based classification system; and
Generating (414) the classification output based on the extracted features.

9. The computer implemented method of one of the claims 4 to 8, wherein extracting features comprises:
Identifying (408) pulse characterization features of the pressure signal.

10. The computer implemented method of one of the claims 4 to 9, and further comprising:
Detecting (388) a central flow system parameter generated from a central flow system (308) on the agricultural application machine (100); and
Applying (412) the central flow system parameter with the applicator parameter to the ML-based classification system, wherein generating the classification output comprises generating the classification output based on the applicator parameter and the central control system parameter.

11. The computer implemented method of one of the claims 4 to 10, wherein the central flow system (308) comprises a pump (115) that pumps liquid to the applicator (109) and wherein detecting a central flow system parameter comprises:
Detecting (390) flow of the liquid material pumped by the pump.

12. The computer implemented method of one of the claims 4 to 11, wherein the central flow system (308) comprises the pump (115) that pumps liquid to the applicator (109) and wherein detecting the central flow system parameter comprises:
Detecting (392) pressure of the liquid material pumped by the pump (115).

13. The computer implemented method of one of the claims 4 to 12, wherein generating a control signal comprises:
Generating (430) an operator interface control signal to control an operator interface system (96) based on the classification output.

14. The computer implemented method of one of the claims 4 to 13, wherein generating (428) a control signal comprises:
Generating (432) a communication system control signal to control a communication system (350) based on the classification output.

15. The computer implemented method of one of the claims 4 to 14, wherein generating (428) a control signal comprises:
Generating (428) an application system control signal to control the applicator (109) based on the classification output.
